# EUROPÄISCHE PATENTSCHRIFT

(11) **EP 1 091 335 B1**
(45) Veröffentlichungstag und Bekanntmachung des Hinweises auf die Patenterteilung: **16.02.2005**
(21) Anmeldenummer: 00890285.0
(22) Anmeldetag: 19.09.2000
(51) Int. Cl.: G09B 9/042, G09B 19/16

(54) **Vorrichtung zur Ausbildung von Fahrern von Kraftfahrzeugen**
Device for training drivers of motor vehicles
Dispositif d'entraînement pour conducteurs de véhicules

(30) Priorität: 07.10.1999 AT 171099
(43) Veröffentlichungstag der Anmeldung: 11.04.2001
(73) Patentinhaber: Thurner, Jörg, Ing., 1180 Wien (AT)
(72) Erfinder: Thurner, Jörg, Ing., 1180 Wien (AT)
(74) Vertreter: Babeluk, Michael, Dipl.-Ing.

(56) Entgegenhaltungen:
- AU-A- 687 338
- DE-A- 1 459 792
- DE-A- 19 807 416
- FR-A- 2 567 667
- FR-A- 2 730 580
- SU-A- 1 524 085

## Beschreibung

Die Erfindung betrifft eine Vorrichtung zur Ausbildung von Fahrern von Kraftfahrzeugen mit einer Anlaufstrecke, einer Schleudereinrichtung, die auf das Kraftfahrzeug Kräfte ausübt, und mit veränderlichen Hindernissen, die in Fahrtrichtung nach der Schleudereinrichtung angeordnet sind.

Es hat sich herausgestellt, dass eine große Mehrzahl von Kraftfahrzeuglenkern aufgrund entsprechender Vorsicht und defensiver Fahrweise äußerst selten in kritische Fahrsituationen kommen, in denen eine schnelle und richtige Reaktion erforderlich ist, um einen Unfall zu vermeiden. Dementsprechend besteht die Notwendigkeit, Lenker gezielt auszubilden, um die Wahrscheinlichkeit einer richtigen Reaktion in kritischen Fahrsituationen zu erhöhen. Für eine solche Ausbildung sind spezielle Übungsstrecken gebaut worden, auf denen ohne Gefahr für Lenker und Fahrzeug das richtige Verhalten in kritischen Situationen geübt werden kann. Mit besonders dafür entwickelten Vorrichtungen kann der plötzliche Verlust der Bodenhaftung oder das unerwartete Auftreten von Hindernissen simuliert werden. Auf solchen Übungsstrecken sind beispielsweise Fahrbahnabschnitte mit stark verringertem Reibwert vorgesehen, auf denen bestimmte Fahrmanöver durchgeführt werden müssen. Weiters sind sogenannte Schleuderplatten bekannt, mit denen eine instabile Fahrsituation gezielt und reproduzierbar erzeugt werden kann. Bei den Schleuderplatten handelt es sich um in der Fahrbahn eingelassene Platten, die während der Überfahrt des Kraftfahrzeuges seitlich verschoben werden. Üblicherweise erfolgt diese Verschiebung nur bei der Überfahrt der Hinterräder des Kraftfahrzeuges, wodurch ein Übersteuern simuliert werden kann, das heißt eine Situation, bei der die Hinterräder des Fahrzeuges in einer Kurve nach außen wegrutschen. In diesem Zusammenhang haben sich Schleuderplatten als besonders wirksames Mittel herausgestellt, um Fahrer von Kraftfahrzeugen auf das richtige Verhalten im einem übersteuernden Fahrzeug zu trainieren.

Es hat sich jedoch herausgestellt, dass es mit Hilfe von bekannten Schleuderplatten nicht möglich ist, wirklichkeitsgetreu ein Untersteuern, das heißt das Wegrutschen der Vorderräder nach außen zu simulieren. Es ist jedoch ebenso wichtig, Fahrer auf das richtige Verhalten beim Untersteuern vorzubereiten wie beim Übersteuern.

Aufgabe der vorliegenden Erfindung ist es, eine Vorrichtung der oben beschriebenen Art so weiterzubilden, dass eine umfassendere Ausbildung von Fahrern ermöglicht wird, wobei insbesonders eine realitätsnahe Simulation eines untersteuernden Fahrzeugverhaltens möglich sein soll.

Erfindungsgemäß wird diese Aufgabe dadurch gelöst, dass die Schleudereinrichtung eine in ihrer Höhe verstellbare Rampe aufweist, die aus der Fahrbahnebene nach oben vorragt, um auf das Kraftfahrzeug eine nach oben gerichtete Kraft auszuüben.

Die Grundidee der vorliegenden Erfindung ist es, eine Fahrsituation zu schaffen, bei der insbesonders die Vorderräder kurzzeitig keine oder nur eine minimale Bodenhaftung besitzen. Dies wird dadurch erreicht, dass auf der Rampe das Fahrzeug zunächst nach oben beschleunigt wird und nach der Rampe eine starke Entlastung der Räder des Fahrzeuges bewirkt wird, die soweit gehen kann, dass die Räder kurzfristig völlig vom Boden abheben. Auf diese Weise ist es möglich, über einen definierten Zeitraum eine Situation zu schaffen, in der tatsächlich keinerlei Bodenhaftung vorliegt. Im Gegensatz dazu ist es auch bei optimalen Gleitbelägen nicht möglich, die seitlichen Führungskräfte gänzlich zu eliminieren. Insbesonders hängt der Reibwert bei Gleitbelege sehr stark vom Ausmaß der Verschmutzung und von der Reifenqualität ab, sodass die Reproduzierbarkeit des Fahrverhaltens in nicht ausreichender Weise gegeben ist. Bei der vorliegenden Erfindung hängt jedoch die Beeinflussung des Fahrzeuges nur von der Art des Fahrzeuges und der Geschwindigkeit bei der Überfahrt ab. Dadurch ist eine hervorragende Reproduzierbarkeit gegeben.

In einer Ausführungsvariante der Erfindung kann die Rampe in ihrer Höhe verstellbar sein, um die Stärke der erzielten Wirkung einstellen zu können. Während der Überfahrt des Kraftfahrzeuges wird die Rampe jedoch nicht verändert. Dies bewirkt eine Entlastung der Vorderräder gefolgt von einer Entlastung der Hinterräder des Fahrzeuges. Um ein Untersteuern zu simulieren, wird dabei eine Lenkbewegung des Fahrers in dem Zeitabschnitt provoziert, in dem die Vorderräder entlastet sind. Dies erfolgt durch entsprechende Einstellung der beweglichen Hindernisse.

In einer alternativen Ausführungsvariante der Erfindung ist jedoch vorgesehen, dass eine Steuerungseinrichtung vorgesehen ist, die dazu ausgebildet ist, eine Veränderung der Höhe der Rampe während der Überfahrt des Kraftfahrzeuges zu bewirken. Dies ermöglicht eine stärker der Realität entsprechende Simulation des Fahrverhaltens. Wenn die Steuerungseinrichtung so programmiert ist, dass die Rampe während der Überfahrt der Vorderräder angehoben ist, während sie bei Überfahrt der Hinterräder abgesenkt ist, kann ein Untersteuern ohne anschließendes Übersteuern simuliert werden. Umgekehrt ist natürlich auch durch alleiniges Entlasten der Hinterräder ein Übersteuern simulierbar.

Die Wirkung der Entlastung kann insbesonders dadurch verstärkt werden, dass in Fahrtrichtung nach der Schleudereinrichtung die Fahrbahn mit einem Gleitbelag ausgestattet ist. Auf diese Weise werden auch während des Einfederns der Räder die seitlichen Führungskräfte minimiert.

Eine besonders differenzierte Simulation auch komplexer Fahrzustände kann dadurch erreicht werden, dass in Fahrtrichtung vor der Rampe eine Schleuderplatte vorgesehen ist, die während der Überfahrt des Kraftfahrzeuges seitlich verschiebbar ist. Beispielsweise kann auf diese Weise extrem starkes Übersteuern simuliert werden, wenn im Anschluss an eine seitliche Beschleunigung der Hinterräder auf der Schleuderplatte eine Entlastung der Hinterräder nach der Rampe bewirkt wird.

Als besonders günstig hat es sich herausgestellt, als bewegliches Hindernis in der Fahrbahn eingelassene Düsen zu verwenden. Auf diese Weise kann eine aus Wasser bestehende Wand erzeugt werden, der der Fahrer ausweichen muss. Im Gegensatz zu festen Hindernissen ist auch bei Misslingen der Übung jegliche Gefahr ausgeschlossen.

Ein besonders einfacher konstruktiver Aufbau der Erfindung ergibt sich, wenn die Rampe aus einer Platte gebildet ist, die eine Schwenkbewegung ausführt, wobei die Vorderkante der Platte im Bereich der Fahrbahnebene verbleibt und die Hinterkante über die Fahrbahnebene angehoben wird.

In einer besonders begünstigten Ausführungsvariante der Erfindung ist vorgesehen, dass die Rampe aus mehreren Platten ausgebildet ist, die gemeinsam anhebbar bzw. absenkbar ausgebildet sind, so dass die Rampe in ihrer angehobenen Stellung einen ansteigenden Abschnitt und einen abfallenden Abschnitt aufweist. Auf diese Weise ist es möglich, eine größere Hubbewegung der Rampe auszuführen, ohne Anbauteile des Fahrzeuges, wie etwa Spoiler, zu gefährden.

Es kann auch vorgesehen sein, dass die Rampe aus mehreren Platten ausgebildet ist, die gemeinsam betätigbar ausgebildet sind, so dass die Rampe aus mehreren ansteigenden und abfallenden Abschnitten zusammengesetzt ist. Dadurch kann bei insgesamt relativ geringer Bewegung des Fahrzeugs in Höhenrichtung ein wiederholtes Abheben der Räder erreicht werden.

In einer weiteren Ausführungsvariante der Erfindung ist vorgesehen, dass die Rampe in einer Richtung quer zur Fahrtrichtung des Fahrzeuges beweglich ausgebildet ist. Auf diese Weise können in einer einzigen Baugruppe die Funktionen einer Schleuderplatte in die erfindungsgemäße Lösung integriert werden. Je nach Ausbildungsziel sind dabei vielfältige Einsatzmöglichkeiten gegeben. So können beispielsweise die Vorderräder wie oben beschrieben entlastet werden, während auf die Hinterräder eine seitliche Schleuderkraft ausgeübt wird.

Weiters betrifft die vorliegende Erfindung ein Verfahren zur Ausbildung von Fahrern von Kraftfahrzeugen unter Verwendung der oben beschriebenen Vorrichtung. Erfindungsgemäß wird dabei so vorgegangen, dass das Kraftfahrzeug auf der Anlaufstrecke zur Schleudereinrichtung fahren gelassen wird und dass die Rampe vor dem Auffahren der Vorderräder des Fahrzeuges in eine angehobene Stellung gebracht wird, jedoch nach dem passieren der Vorderräder und vor dem Auffahren der Hinterräder in eine abgesenkte Stellung gebracht wird und dass danach die Stellung der veränderlichen Hindernisse verändert wird.

In der Folge wird die Erfindung anhand der in den Figuren dargestellten Ausführungsbeispielen näher erläutert. Es zeigen schematisch: Die
Fig. 1 einen Längsschnitt durch eine erfindungsgemäße Vorrichtung, die
Fig. 2 eine Draufsicht auf eine solche Vorrichtung, die
Fig. 3 eine weitere Ausführungsvariante der Erfindung in einem Schnitt und
Fig. 4 eine weitere bevorzugte Ausführungsvariante in einem Schnitt.

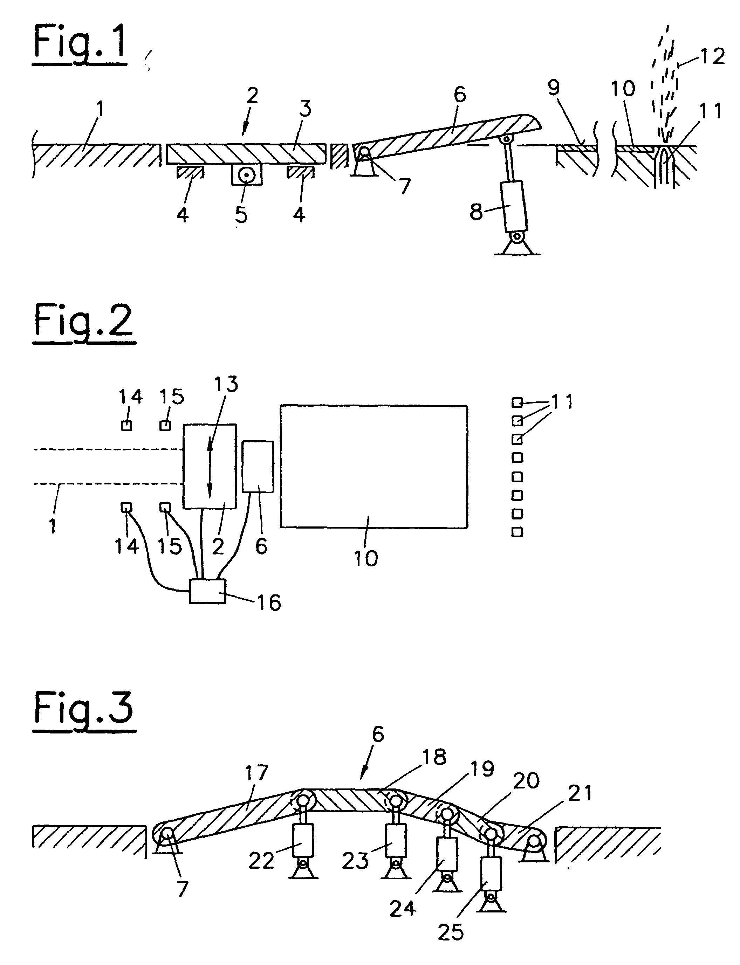

Die Vorrichtung von Fig. 1 besteht aus einer Anlaufstrecke 1, die als gewöhnliche Fahrbahn, beispielsweise aus Asphalt hergestellt ist. Im Anschluss daran ist eine Schleuderplatte 2 angeordnet, die aus einer Platte 3 besteht, die horizontal und quer zur Anfahrtrichtung des Fahrzeuges beweglich gelagert ist. Die Auflager sind schematisch mit 4 angedeutet und mit 5 ist ein Hydraulikzylinder bezeichnet, der die Verstellbewegung ausführt. Unmittelbar anschließend an die Schleuderplatte 2 ist eine Rampe 6 vorgesehen, die im vorderen Abschnitt bei 7 gelagert ist. Über einen Hydraulikzylinder 8 ist die Rampe 6 aus der Fahrbahnebene 9 nach oben herausschwenkbar, um ein nicht dargestelltes Fahrzeug bei der Überfahrt nach oben zu beschleunigen, wodurch im Anschluss an die Rampe 6 die Räder entlastet werden. Die Fahrbahn nach der Rampe 6 ist mit einem Gleitbelag 10 versehen, der einen verringerten Reibwert aufweist. Auf diese Weise kann der Bereich verringerter Seitenführungskraft nach der Rampe vergrößert werden. In Fahrtrichtung weiter hinten sind in der Fahrbahn Düsen 11 angeordnet, die Wasserfontänen 12 nach oben gerichtet erzeugen können. Diese Wasserfontänen 12 stellen bewegliche Hindernisse dar, denen der Fahrer ausweichen soll.

In der Fig. 2 ist der Gesamtaufbau einer erfindungsgemäßen Vorrichtung in einer Ansicht von oben dargestellt. Die Anlaufstrecke 1 ist mit unterbrochenen Linien, die beispielsweise Leitlinien entsprechen, markiert. Unmittelbar vor der Schleuderplatte 2, die in Richtung des Doppelpfeiles 13 beweglich ist, sind zwei Paare von Lichtschranken 14, 15 angeordnet, um Ort und Geschwindigkeit des sich nähernden Kraftfahrzeuges genau zu erfassen. Die Lichtschranken 14, 15 sind mit einem Steuergerät 16 verbunden, das die Bewegung der Schleuderplatte 2 und der Rampe 3 steuert. Je nach Ausbildungsziel wird eine vorgegebene Beeinflussung des Fahrzeuges durchgeführt. So kann etwa im Steuergerät 16 vorgegeben werden, dass die seitliche Bewegung der Schleuderplatte 2 während der Überfahrt der Hinterräder des Kraftfahrzeuges stattzufinden hat, während die Rampe 6 sich bei der Überfahrt der Vorderräder in angehobenem Zustand, jedoch während der Überfahrt der Hinterräder in abgesenktem Zustand befinden soll. Es ist jedoch auch möglich, die Rampe 6 so zu steuern, dass die Hubbewegung während der Überfahrt eines Radpaares stattfindet.

Mit 10 ist wiederum der Bereich des Gleitbelages nach der Rampe 6 dargestellt. Im Anschluss daran sind die Düsen 11 quer zur Fahrtrichtung angeordnet, die zur Erzeugung des beweglichen Hindernisses dienen. Indem beispielsweise die Stellung der Düsen erst zum Zeitpunkt der Überfahrt der Rampe 6 eingestellt wird, oder zu diesem Zeitpunkt eine Veränderung des Ortes des Hindernisses durchgeführt wird, kann eine Lenkbewegung des Fahrers genau zu dem Zeitpunkt hervorgerufen werden, zu dem sich das Fahrzeug mit entlasteten Rädern auf dem Gleitbelag 10 befindet. Auf diese Weise kann schon bei geringen Geschwindigkeiten und völlig gefahrlos auch eine Situation simuliert werden, wie sie etwa beim plötzlichen Auftreten eines Hindernisses bei hohen Geschwindigkeiten und relativ griffigem Belag auftritt.

In der Fig. 3 ist eine alternative Ausführungsvariante der Erfindung dargestellt. Die Rampe 6 besteht dabei aus mehreren, in ihrer Höhe beweglichen Gliedern, die als Platten 17, 18, 19, 20, 21 ausgebildet sind und die über Hydraulikzylinder 22, 23, 24, 25 betätigt werden. Bei dieser Ausbildung ist es möglich, einen sanfteren Verlauf der Fahrbahnerhebung zu modellieren, sodass auch bei größeren Hüben die Gefahr für Fahrzeugteile, wie etwa Spoiler oder dergleichen verringert wird.

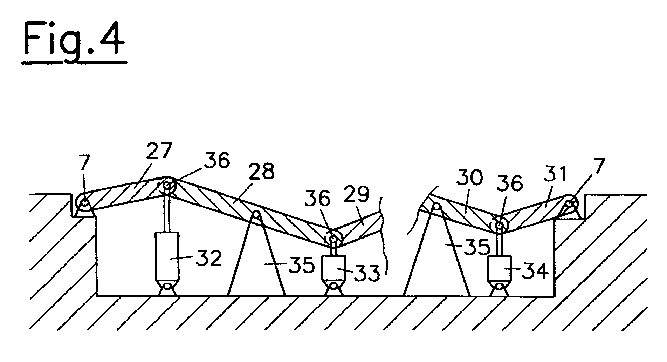

Bei der Ausführungsvariante von Fig. 4 sind mehrere Platten 27, 28, 29, 30, 31 vorgesehen. Die erste und die letzte Platte 27 bzw. 31 sind an ihren Enden bei 7 gelagert, während die übrigen Platten 28, 29, 30 jeweils etwa die doppelte Länge besitzen und jeweils in ihrer Mitte auf Böcken 35 gelagert sind. Die Enden der Platten 27, 28, 29, 30, 31 sind gelenkig miteinander verbunden und über Hydraulikzylinder 32, 33, 34 kippbar. Auf diese Weise ist die Neigung der Platten 27, 28, 29, 30, 31 abwechselnd ansteigend und abfallend. Die bei zunehmender Neigung der Platten 27, 28, 29, 30, 31 auftretende Verkürzung in Längsrichtung kann über ein verschiebbares Lager 7 oder durch entsprechend ausgeführte Gelenke 36 ausgeglichen werden.

Die vorliegende Erfindung ermöglicht eine äußerst vielfältige Modellierung unterschiedlicher Fahrsituationen von Fahrzeugen bei relativ geringen Geschwindigkeiten ohne Gefahr für den Fahrer oder das Fahrzeug.

## Patentansprüche

1. Vorrichtung zur Ausbildung von Fahrern von Kraftfahrzeugen mit einer Anlaufstrecke (1), einer Schleudereinrichtung, die auf das Kraftfahrzeug Kräfte ausübt, und mit veränderlichen Hindernissen (11), die in Fahrtrichtung nach der Schleudereinrichtung angeordnet sind, **dadurch gekennzeichnet, dass** die Schleudereinrichtung eine in ihrer Höhe verstellbare Rampe (6) aufweist, die aus der Fahrbahnebene nach oben vorragt, um auf das Kraftfahrzeug eine nach oben gerichtete Kraft auszuüben.

2. Vorrichtung nach Anspruch 1, **dadurch gekennzeichnet, dass** eine Steuerungseinrichtung (16) vorgesehen ist, die dazu ausgebildet ist, eine Veränderung der Höhe der Rampe (6) während der Überfahrt des Kraftfahrzeuges zu bewirken.

3. Vorrichtung nach einem der Ansprüche 1 oder 2, **dadurch gekennzeichnet, dass** in Fahrtrichtung nach der Schleudereinrichtung die Fahrbahn mit einem Gleitbelag (10) ausgestattet ist.

4. Vorrichtung nach einem der Ansprüche 1 bis 3, **dadurch gekennzeichnet, dass** in Fahrtrichtung vor der Rampe (6) eine Schleuderplatte (2) vorgesehen ist, die während der Überfahrt des Kraftfahrzeuges seitlich verschiebbar ist.

5. Vorrichtung nach einem der Ansprüche 1 bis 4, **dadurch gekennzeichnet, dass** das bewegliche Hindernis aus Düsen (11) gebildet ist, die Wasserstrahlen aus der Fahrbahnebene ausstoßen können.

6. Vorrichtung nach einem der Ansprüche 1 bis 5, **dadurch gekennzeichnet, dass** die Rampe (6) aus einer Platte gebildet ist, die eine Schwenkbewegung ausführt, wobei die Vorderkante der Platte im Bereich der Fahrbahnebene verbleibt und die Hinterkante über die Fahrbahnebene angehoben wird.

7. Vorrichtung nach einem der Ansprüche 1 bis 5, **dadurch gekennzeichnet, dass** die Rampe (6) aus mehreren Platten (17, 18, 19, 20, 21) ausgebildet ist, die gemeinsam anhebbar bzw. absenkbar ausgebildet sind, so dass die Rampe (6) in ihrer angehobenen Stellung einen ansteigenden Abschnitt und einen abfallenden Abschnitt aufweist.

8. Vorrichtung nach einem der Ansprüche 1 bis 5, **dadurch gekennzeichnet, dass** die Rampe (6) aus mehreren Platten (27, 28, 29, 30, 31) ausgebildet ist, die gemeinsam betätigbar ausgebildet sind, so dass die Rampe (6) aus mehreren ansteigenden und abfallenden Abschnitten zusammengesetzt ist.

9. Vorrichtung nach einem der Ansprüche 1 bis 8, **dadurch gekennzeichnet, dass** die Rampe (6) in einer Richtung quer zur Fahrtrichtung des Fahrzeuges beweglich ausgebildet ist.

10. Verfahren zur Ausbildung von Fahrern von Kraftfahrzeugen mit einer Vorrichtung nach einem der Ansprüche 1 bis 7, **dadurch gekennzeichnet, dass** das Kraftfahrzeug auf der Anlaufstrecke (1) zur Schleudereinrichtung fahren gelassen wird und dass die Rampe (6) vor dem Auffahren der Vorderräder des Fahrzeuges in eine angehobene Stellung gebracht wird, jedoch nach dem passieren der Vorderräder und vor dem Auffahren der Hinterräder in eine abgesenkte Stellung gebracht wird und dass danach die Stellung der veränderlichen Hindernisse (11) verändert wird.

## Claims

1. Apparatus for the training of drivers of automotive vehicles, which comprises a run-up section (1), and a skidding mechanism exerting forces on the vehicle, and variable obstacles (11) placed behind the skidding mechanism in the travel direction of the vehicle, **characterized in that** the skidding mechanism is provided with a ramp (6) of adjustable height projecting upwards from the plane of the roadway, which will exert an upward force on the vehicle.

2. Apparatus according to claim 1, **characterized in that** a control unit (16) is provided which is designed to effect a change in the height of the ramp (6) during the passing of the vehicle.

3. Apparatus according to any of claims 1 or 2, **characterized in that** the roadway is provided with an anti-friction coating (10) behind the skidding mechanism in travel direction.

4. Apparatus according to any of claims 1 to 3, **characterized in that** a skidding plate (2) is provided in front of the ramp (6) in travel direction, which can be shifted laterally during the passing the vehicle.

5. Apparatus according to any of claims 1 to 4, **characterized in that** the movable obstacle consists of nozzles (11) which can eject jets of water from the plane of the roadway.

6. Apparatus according to any of claims 1 to 5, **characterized in that** the ramp (6) is configured as a plate making a tilting movement, the front edge of the plate remaining in the plane of the roadway and the rear edge being raised above the plane of the roadway.

7. Apparatus according to any of claims 1 to 5, **characterized in that** the ramp (6) is configured as a plurality of plates (17, 18, 19, 20, 21) which are designed so as to be jointly lifted and lowered, such that the ramp (6) in its lifted position will have an ascending section and a descending section.

8. Apparatus according to any of claims 1 to 5, **characterized in that** the ramp (6) is configured as a plurality of plates (27, 28, 29, 30, 31) which are designed so as to be jointly actuated, such that the ramp (6) is composed of a plurality of ascending and descending sections.

9. Apparatus according to any of claims 1 to 8, **characterized in that** the ramp (6) is designed so as to be movable transversely to the travel direction of the vehicle.

10. Method for the training of drivers of automotive vehicles using an apparatus according to any of claims 1 to 7, **characterized in that** the vehicle is driven on the run-up section (1) up to the skidding mechanism, and that the ramp (6) is raised into lifted position before the front wheels touch but brought into lowered position after the passing of the front wheels and before the rear wheels touch, and that the position of the variable obstacles (11) is changed thereafter.

## Revendications

1. Dispositif pour former des conducteurs de véhicules automobiles comportant un trajet de lancement (1), une installation de projection qui exerce des forces sur le véhicule ainsi que des obstacles variables (11) installés en aval de l'installation de projection dans la direction de déplacement,
**caractérisé en ce que**
l'installation de projection comporte une rampe (6) de hauteur réglable qui dépasse vers le haut par rapport au plan de la chaussée pour exercer sur le véhicule automobile une force dirigée vers le haut.

2. Dispositif selon la revendication 1,
**caractérisé par**
une installation de projection (16) produisant une variation de la hauteur de la rampe (6) pendant le passage du véhicule.

3. Dispositif selon l'une des revendications 1 ou 2,
**caractérisé en ce que**
la chaussée est munie d'un revêtement glissant (10) en aval de l'installation de projection.

4. Dispositif selon l'une des revendications 1 à 3,
**caractérisé en ce qu'**
en amont de la rampe (6), dans la direction de déplacement, elle comporte une plaque de projection (2) qui se déplace transversalement pendant le passage du véhicule.

5. Dispositif selon l'une des revendications 1 à 4,
**caractérisé en ce que**
l'obstacle mobile est formé de buses (11) qui peuvent projeter des jets d'eau sortant du plan de la chaussée.

6. Dispositif selon l'une des revendications 1 à 5,
**caractérisé en ce que**
la rampe (6) est formée d'une plaque exécutant un mouvement de basculement, l'arête avant de la plaque restant au niveau du plan de la chaussée et l'arête arrière étant relevée au-dessus du plan de la chaussée.

7. Dispositif selon l'une des revendications 1 à 5,
**caractérisé en ce que**
la rampe (6) se compose de plusieurs plaques (17, 18, 19, 20, 21) qui sont réalisées de manière à se soulever ou s'abaisser en commun pour que la rampe (6) présente en position relevée, un segment ascendant et un segment descendant.

8. Dispositif selon l'une des revendications 1 à 5,
**caractérisé en ce que**
la rampe (6) est formée de plusieurs plaques (27, 28, 29, 30, 31) actionnées en commun pour que la rampe (6) soit composée de plusieurs segments montant et descendant.

9. Dispositif selon l'une des revendications 1 à 8,
**caractérisé en ce que**
la rampe (6) est mobile dans une direction transversale à la direction de déplacement du véhicule.

10. Procédé pour former les conducteurs de véhicules automobiles à l'aide d'un dispositif selon l'une des revendications 1 à 7,
**caractérisé en ce qu'**
on fait rouler le véhicule sur un trajet de lancement (1) vers une installation de projection et avant l'arrivée des roues avant du véhicule on relève la rampe (6) mais après passage des roues avant et avant l'arrivée des roues arrière on met la rampe dans une position abaissée et ensuite on modifie la position des obstacles variables (11).
